# EUROPEAN PATENT APPLICATION

(11) **EP 4 205 541 A1**
(43) Date of publication of application: **05.07.2023**
(21) Application number: 21861848.6
(22) Date of filing: 15.06.2021
(51) Int. Cl.: A01K 87/04, A01K 91/00, A01K 97/00

(54) **FISHING LINE PREPARATION INSTRUMENT FOR FISHING ROD GUIDE RING**

(30) Priority: 25.08.2020 KR 20200107269
(71) Applicant: Lee, Seuk Jong, Seoul 07653 (KR)
(72) Inventor: Lee, Seuk Jong, Seoul 07653 (KR)
(74) Representative: Abel & Imray LLP
(86) International application number: PCT/KR2021/007458
(87) International publication number: WO 2022/045547

(57) **Abstract**

The technical objective of the present invention is to provide a fishing line preparation instrument for a fishing rod guide ring, the instrument being capable of accurately preparing a fishing line in a plurality of guide rings and being capable of shortening preparation time. To this end, the fishing line preparation instrument for a fishing rod guide ring, of the present invention, is used for a blank type fishing rod having a plurality of guide rings at fixed intervals, and comprises: a guide ring insertion member to be inserted into the plurality of guide rings; and a fishing-line-fixing part provided at one end portion and/or the other end portion of the guide ring insertion member to attachably/detachably fix the fishing line to the guide ring insertion member.

## Description

### Technical Field

The present disclosure relates to a fishing instrument.

### Background Art

Fishing is the activity of catching fish. To do fishing, a variety of fishing equipment such as rods, reels, and rigs (lines, sinkers, hooks, etc.) is used.

When setting up a fishing rod with a fishing rig, a fishing line, a fishing float, a fishing sinker, a fishing swivel, and a fishing hook are connected to the fishing rod sequentially. The fishing sinker, which is a weight, is connected to the fishing line and sinks to hold the fishing line under water, and the fishing hook is connected to the end of the fishing line.

Meanwhile, the fishing rod is provided with a plurality of guide rings that are disposed at intervals in the length direction of the rod and into which the fishing line is inserted. In particular, the fishing rod can be divided into a telescopic type in which the length thereof is adjusted in a telescopic manner and the distance between guide rings is adjusted; and a blank type in which the length thereof and the distance between guide rings are not adjusted. Furthermore, the blank type fishing rod can be divided into a fishing rod composed of one blank; and a piece fishing rod in which two or more separate blanks are combined together.

Of these, the blank type fishing rod includes a front blank provided with a handle or a fishing reel, and a rear blank in which a plurality of guide rings are disposed at intervals. Thus, a user (joiner, angler, etc.) rigs the fishing line to the fishing rod by pulling the fishing line from the fishing reel and then sequentially inserting the end of the fishing line into each of the guide rings.

However, this conventional fishing line rigging method is problematic in that a rigging time is long because it takes a long time to insert the fishing line into all the guide rings. In particular, since the size of each of the guide rings gradually decreases toward a rod tip of the rear blank, the fishing line becomes difficult to insert into the guide rings as it goes toward the rod tip. The insertion of the fishing line into the guide rings becomes more difficult on a ship shaken by waves or in a dark fishing environment, resulting in a longer rigging time. Also, when the user accidentally fails to insert the fishing line into one of the guide rings, the rear blank is broken as the load is concentrated on the corresponding guide ring during fishing.

### Disclosure

### Technical Problem

Accordingly, the present disclosure has been made keeping in mind the above problems occurring in the related art, and an objective of the present disclosure is to provide a fishing line preparation instrument for a fishing rod guide ring, the instrument being capable of allowing a user to accurately rig a fishing line to a plurality of guide rings and shortening a rigging time.

### Technical Solution

In order to accomplish the above objective, the present disclosure provides a fishing line preparation instrument for a fishing rod guide ring, the instrument being used for a blank type fishing rod in which a plurality of guide rings are disposed at fixed intervals, and including: a guide ring insertion member configured to be inserted into the plurality of guide rings; and a fishing line fixing part provided at least one of a first end and a second end of the guide ring insertion member and configured to removably fix a fishing line to the guide ring insertion member.

The guide ring insertion member may have a thickness or diameter capable of passing through a guide ring having the smallest size among the plurality of guide rings.

The guide ring insertion member may have a length sufficient to extend entirely through all the plurality of guide rings when inserted into the plurality of guide rings.

In addition, the guide ring insertion member may be made of an elastic material that can be restored to its original state even when bent.

A metal or plastic material may be used as the elastic material for the guide ring insertion member.

The fishing line fixing part may include: a fishing line through-hole formed through a circumferential surface of the guide ring insertion member; and a fishing line introduction hole formed on the circumferential surface of the guide ring insertion member to be in communication with the fishing line through-hole, and configured to allow the fishing line to be introduced into the fishing line through-hole therethrough from the outside.

The fishing line fixing part may further include a fishing line fixing slit recessed from an inner circumferential surface of the fishing line through-hole, having a width smaller than a diameter of the fishing line, and configured to allow the fishing line introduced into the fishing line through-hole to be inserted and fixed therein.

The fishing line fixing slit may be a fine "V"-shaped slit so that the fishing line is fixed in the fixing slit regardless of the diameter of the fishing line. Here, the "V-shaped" slit may be a slit of which a width gradually decreases outwardly.

The fishing line fixing part may be provided at each of a first end and a second end of the guide ring insertion member.

The instrument according to the present disclosure may further include: a first end cover member fitted over the first end of the guide ring insertion member and configured to protect the fishing line fixing part provided at the first end of the guide ring insertion member; and a second end cover member fitted over the second end of the guide ring insertion member and configured to protect the fishing line fixing part provided at the second end of the guide ring insertion member.

When the fishing line is fixed to the second end of the guide ring insertion member through the fishing line fixing part, the second end cover member may be removed and the first end cover member may be used as a handle.

The instrument according to the present disclosure may further include a long tubular-shaped storage container configured to accommodate the guide ring insertion member, and having opposite ends closed by a first end cap and a second end cap, respectively.

### Advantageous Effects

As described above, a fishing line preparation instrument for a fishing rod guide ring according to the present disclosure has the following effects.

The fishing line preparation instrument according to the present disclosure is a fishing line preparation instrument that is used for a blank type fishing rod in which a plurality of guide rings are disposed at fixed intervals. The fishing line preparation instrument is characterized by including a guide ring insertion member and a fishing line fixing part. With this configuration, a user can insert a fishing line into the guide rings in such a manner that the guide ring insertion member is sequentially inserted into the guide rings from a guide ring on a rod tip or in the opposite direction (the running direction of the fishing line), the fishing line is fixed to the guide ring insertion member through the fishing line fixing part, and the guide ring insertion member is pulled in the running direction of the fishing line. Thus, the user can quickly and efficiently rig the fishing line to the fishing rod. In particular, the user can efficiently insert the fishing line into the guide rings through the fishing line fixing part and the guide ring insertion member even on a ship shaken by waves or in a dark fishing environment. Consequently, since the user can accurately rig the fishing line to the guide rings, a rigging time can be reduced.

Furthermore, the guide ring insertion member has a thickness or diameter capable of passing through a guide ring having the smallest size among the plurality of guide rings, that is, the guide ring being provided on the rod tip. With this configuration, the user can efficiently insert the guide ring insertion member into the smallest guide ring on the rod tip even on a ship shaken by waves or in a dark fishing environment.

Furthermore, the guide ring insertion member has a length sufficient to extend entirely through all the guide rings when inserted into the guide rings. With this configuration, unlike a conventional method of inserting a fishing line into each guide ring one by one, the user can insert the guide ring insertion member into all the guide rings with one insertion operation while holding it, so there is no possibility of skipping any guide rings during the insertion operation, and an insertion time can be shortened.

Furthermore, the guide ring insertion member is made of an elastic material that can be restored to its original state even when bent. With this configuration, the shape of the guide ring insertion member can be always maintained straight without the possibility of being permanently deformed, so the user can accurately insert the guide ring insertion member while holding it regardless of the type of the guide rings.

Furthermore, the fishing line fixing part includes a fishing line through-hole and a fishing line introduction hole. With this configuration, the user can efficiently introduce the fishing line into the fishing line through-hole from the outside through the fishing line introduction hole without passing the fishing line through the fishing line through-hole like passing a thread through a needle hole. Thereby, the user can efficiently and quickly attach the fishing line to the guide ring insertion member through the fishing line through-hole and the fishing line introduction hole even on a ship shaken by waves or in a dark fishing environment.

Furthermore, the fishing line fixing part further includes a fishing line fixing slit. With this configuration, the user can insert the fishing line introduced into the fishing line through-hole into the fishing line fixing slit and then fix it directly without using a separate knot. Thereby, the user can efficiently and quickly fix the fishing line to the guide ring insertion member through the fishing line through-hole, the fishing line introduction hole, the fishing line fixing slit even on a ship shaken by waves or in a dark fishing environment.

Furthermore, the fishing line preparation instrument further includes a first end cover member and a second end cover member. With this configuration, the first end cover member and the second end cover member can protect respective fishing line fixing parts provided on first and second ends of the guide ring insertion member. In addition, when the fishing line is fixed to the second end of the guide ring insertion member through the fishing line fixing part, the second end cover member can be removed and the first end cover member can be used as a handle.

Furthermore, the fishing line preparation instrument further includes a storage container. With this configuration, the guide ring insertion member can be accommodated in the storage container and stored by closing opposite ends of the storage container with a first end cap and a second end cap. Thus, the guide ring insertion member can be protected from being bent during storage. In addition, even when the guide ring insertion member is made of a metal material, it can be prevented from being rusted by salt in seawater.

### Description of Drawings

FIG. 1 is a view schematically illustrating a fishing line preparation instrument for a fishing rod guide ring according to an embodiment of the present disclosure.
FIG. 2 is a view schematically illustrating a process of inserting a fishing line into a guide ring of the fishing line preparation instrument illustrated in FIG. 1.
FIG. 3 is a view schematically illustrating a fishing line preparation instrument for a fishing rod guide ring according to another embodiment of the present disclosure.
FIG. 4 is a view schematically illustrating a fishing line preparation instrument for a fishing rod guide ring according to still another embodiment of the present disclosure.

### Mode for Invention

Hereinafter, exemplary embodiments of the present disclosure will be described in detail with reference to the accompanying drawings such that the present disclosure can be easily embodied by one of ordinary skill in the art to which the present disclosure belongs. The present disclosure may, however, be embodied in many different forms and should not be construed as being limited to only the embodiments set forth herein.

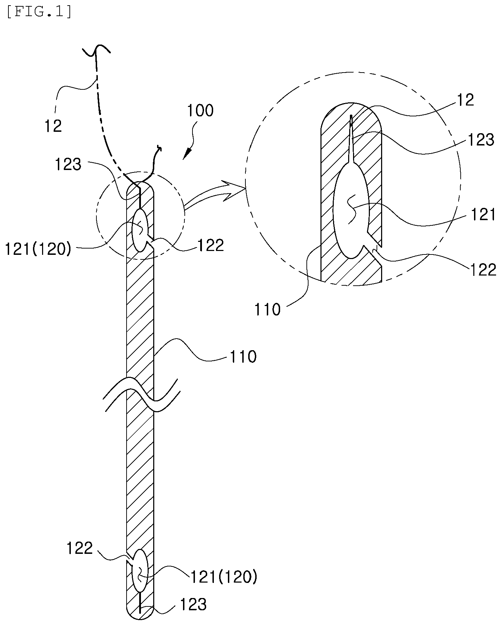

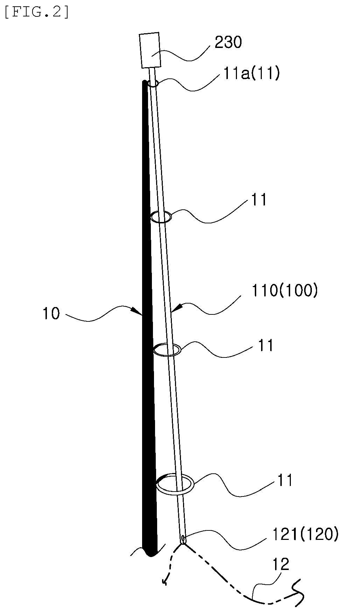

FIG. 1 is a view schematically illustrating a fishing line preparation instrument for a fishing rod guide ring according to an embodiment of the present disclosure. FIG. 2 is a view schematically illustrating a process of inserting a fishing line into a guide ring of the fishing line preparation instrument illustrated in FIG. 1.

As illustrated in FIGS. 1 and 2, the fishing line preparation instrument 100 for the fishing rod guide ring according to the embodiment of the present disclosure is a fishing line preparation instrument that is used for a blank type fishing rod 10 in which a plurality of guide rings 11 are disposed at fixed intervals. The fishing line preparation instrument 100 includes a guide ring insertion member 110 and a fishing line fixing part 120. Hereinafter, each component will be described in detail with continuous reference to FIGS. 1 and 2.

As illustrated in FIG. 2, the guide ring insertion member 110 is a part for being inserted into the plurality of guide rings 11 fixed to the fishing rod 10. As illustrated in FIGS. 1 and 2, the guide ring insertion member 110 may have an elongated shape.

The fishing line fixing part 120 is a component for removably fixing the fishing line 12 to the guide ring insertion member 110. As illustrated in FIG. 1, the fishing line fixing part 120 may be provided at each of first and second ends of the guide ring insertion member 110. Of course, although not illustrated, the fishing line fixing part 120 may be provided only at either end of the guide ring insertion member 110.

Thus, a user can insert the fishing line 12 into the guide rings 11 in such a manner that the guide ring insertion member 110 is sequentially inserted into the guide rings 11 from a guide ring 11a on a rod tip, the fishing line 12 is fixed to the guide ring insertion member 110 through the fishing line fixing part 120, and the guide ring insertion member 110 is pulled in the running direction of the fishing line 12. Thus, the user can quickly and efficiently rig the fishing line 12 to the fishing rod 10. In particular, the user can efficiently insert the fishing line 12 into the guide rings 11 through the fishing line fixing part 120 and the guide ring insertion member 110 even on a ship shaken by waves or in a dark fishing environment. Consequently, since the user can accurately rig the fishing line 12 to the guide rings 11, a rigging time can be shortened.

Hereinafter, the guide ring insertion member 110 will be described in more detail with reference again to FIGS. 1 and 2.

The guide ring insertion member 110 may have a thickness or diameter capable of passing through a guide ring having the smallest size among the plurality of guide rings 11, that is, the guide ring 11a being provided on the rod tip. Thus, the user can efficiently insert the guide ring insertion member 110 into the smallest guide ring 11a on the rod tip even on a ship shaken by waves or in a dark fishing environment.

Furthermore, as illustrated in FIG. 2, the guide ring insertion member 110 may have a length sufficient to extend entirely through all the guide rings 11 when inserted into the guide rings 11. Thus, unlike a conventional method (not illustrated) of inserting a fishing line into each guide ring one by one, the user can insert the guide ring insertion member 110 into all the guide rings 11 with one insertion operation while holding it, so there is no possibility of skipping any guide rings 11 during the insertion operation, and an insertion time can be shortened.

In addition, the guide ring insertion member 110 may be made of an elastic material that can be restored to its original state even when bent. Thus, the shape of the guide ring insertion member 110 can be always maintained straight without the possibility of being permanently deformed, so the user can accurately insert the guide ring insertion member 110 while holding it regardless of the type (straight or spiral) of the guide rings. For example, a metal or plastic material may be used as the elastic material for the guide ring insertion member 110.

Hereinafter, the fishing line fixing part 120 will be described in more detail with reference again to FIGS. 1 and 2.

As illustrated in FIG. 1, the fishing line fixing part 120 may include a fishing line through-hole 121 and a fishing line introduction hole 122. The fishing line through-hole 121 may be formed through the circumferential surface of the guide ring insertion member 110. The fishing line introduction hole 122 may be formed on the circumferential surface of the guide ring insertion member 110 to be in communication with the fishing line through-hole 121. The fishing line 12 is introduced into the fishing line through-hole 121 from the outside through the fishing line introduction hole 122.

Thus, the user can efficiently introduce the fishing line 12 into the fishing line through-hole 121 from the outside through the fishing line introduction hole 122 without passing the fishing line 12 through the fishing line through-hole 121 like passing a thread (not illustrated) through a needle hole (not illustrated). Thereby, the user can efficiently and quickly attach the fishing line 12 to the guide ring insertion member 110 through the fishing line through-hole 121 and the fishing line introduction hole 122 even on a ship shaken by waves or in a dark fishing environment.

Furthermore, as illustrated in FIG. 1, the fishing line fixing part 120 may further include a fishing line fixing slit 123. The fishing line fixing slit 123 may be a fine "V"-shaped slit that is recessed from the inner circumferential surface of the fishing line through-hole 121 such that the width thereof gradually decreases outwardly. The fishing line 120 may be caught in a portion of the fishing line fixing slit 123 having a smaller width than the diameter of the fishing line 12. Thus, the user can insert the fishing line 12 introduced into the fishing line through-hole 121 into the fishing line fixing slit 123 and then fix it directly without using a separate knot. Thereby, the user can efficiently and quickly fix the fishing line 12 to the guide ring insertion member 110 through the fishing line fixing slit 123 even on a ship shaken by waves or in a dark fishing environment.

In addition, as illustrated in FIGS. 1 and 2, the guide ring insertion member 110 to which the fishing line 12 is attached is placed in front of the fishing line 12. Thus, when the guide ring insertion member 110 is withdrawn from the guide rings 11 (that is, withdrawn in the running direction of the fishing line 12), the fishing line 12 can be inserted more deeply into the fishing line fixing groove 123 and can be more firmly fixed thereto.

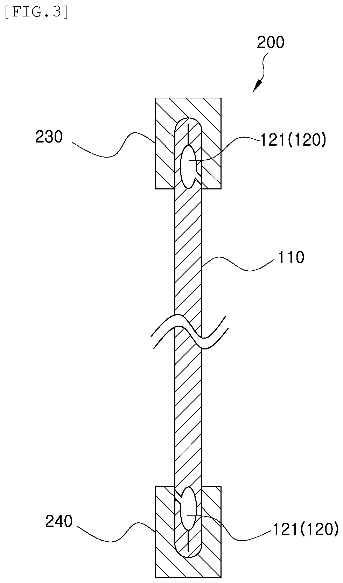

Hereinafter, a fishing line preparation instrument 200 for a fishing rod guide ring according to another embodiment of the present disclosure will be described with reference to FIG. 3.

FIG. 3 is a view schematically illustrating the fishing line preparation instrument 200 for the fishing rod guide ring according to another embodiment of the present disclosure.

As illustrated in FIG. 3, the fishing line preparation instrument 200 according to this embodiment is similar to those according to the previous embodiment, except for including a first end cover member 230 and a second end cover member 240, so these parts will be mainly described below.

Each of the first end cover member 230 and the second end cover member 240 is a component for protecting a fishing line fixing part 120, fixing a guide ring insertion member 110, and serving as a handle. As illustrated in FIG. 3, the first end cover member 230 may cover a first end of the guide ring insertion member 110, and the second end cover member 240 covers a second end of the guide ring insertion member 110. Although not illustrated, the diameter of each of the first end cover member 230 and the second end cover member 240 may be larger than that of a guide ring 11a so that the guide ring insertion member 110 is fixed in a state of being inserted into a plurality of guide rings 11.

Furthermore, the first end cover member 230 and the second end cover member 240 may protect respective fishing line fixing parts 120 provided on the first and second ends of the guide ring insertion member 110. In addition, when a fishing line 12 is fixed to the second end of the guide ring insertion member 110 through the fishing line fixing part 120, the second end cover member 240 may be removed and the first end cover member 230 may be used as a handle.

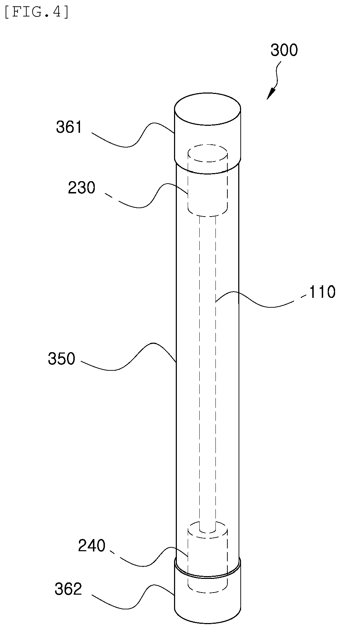

Hereinafter, a fishing line preparation instrument 300 for a fishing rod guide ring according to still another embodiment of the present disclosure will be described with reference to FIG. 4.

FIG. 4 is a view schematically illustrating the fishing line preparation instrument 300 for the fishing rod guide ring according to still another embodiment of the present disclosure.

As illustrated in FIG. 4, the fishing line preparation instrument 300 according to this embodiment is similar to those according to the previous embodiment, except for including a storage container 350, so this part will be mainly described below.

As illustrated in FIG. 4, the storage container 350 may have a long tubular shape, and may accommodate a guide ring insertion member 110 therein. Furthermore, opposite ends of the storage container 350 may be closed by a first end cap 361 and a second end cap 362, respectively.

Thus, the guide ring insertion member 110 can be protected by the storage container 350 from being bent during storage. In addition, since the storage container 350 is sealed by the first end cap 361 and the second end cap 362, even when the guide ring insertion member 110 is made of a metal material, it can be prevented from being rusted by salt in seawater.

Although the preferred embodiments of the present disclosure have been described in detail, those skilled in the art will appreciate that various modifications, additions, and substitutions are possible, without departing from the scope and spirit of the present disclosure as disclosed in the accompanying claims.

### Industrial Applicability

The present disclosure relates to a fishing instrument and has industrial applicability.

## Claims

1. A fishing line preparation instrument for a fishing rod guide ring, the instrument being used for a blank type fishing rod in which a plurality of guide rings are disposed at fixed intervals, and comprising:
a guide ring insertion member configured to be inserted into the plurality of guide rings; and
a fishing line fixing part provided at least one of a first end and a second end of the guide ring insertion member and configured to removably fix a fishing line to the guide ring insertion member.

2. The instrument of claim 1, wherein the guide ring insertion member has a thickness or diameter capable of passing through a guide ring having the smallest size among the plurality of guide rings.

3. The instrument of claim 2, wherein the guide ring insertion member has a length sufficient to extend entirely through all the plurality of guide rings when inserted into the plurality of guide rings.
